# EUROPÄISCHE PATENTSCHRIFT

(11) **EP 0 558 939 B1**
(45) Veröffentlichungstag und Bekanntmachung des Hinweises auf die Patenterteilung: **01.10.1997**
(21) Anmeldenummer: 93101545.7
(22) Anmeldetag: 02.02.1993
(51) Int. Cl.: C04B 33/16, C04B 33/32, C04B 38/00

(54) **Schamottestein und Verfahren zu seiner Herstellung**
Chamotte brick and process for its production
Chamotte et procédé pour sa fabrication

(30) Priorität: 04.03.1992 DE 4206734
(43) Veröffentlichungstag der Anmeldung: 08.09.1993
(73) Patentinhaber: VGT INDUSTRIEKERAMIK GmbH, 37247 Grossalmerode (DE)
(72) Erfinder: Petschauer, Hans, W-3432 Grossalmerode (DE)
(74) Vertreter: Rehberg, Elmar, Dipl.-Ing.

(56) Entgegenhaltungen:
- EP-A- 0 453 886

## Beschreibung

Die Erfindung bezieht sich auf einen Schamottestein nach dem Oberbegriff des Patentanspruch 1 und auf ein Verfahren zu seiner Herstellung. Es handelt sich um einen großformatigen, feuerfesten Stein, der zur Auskleidung eines Zinnbads bei der Flachglasherstellung eingesetzt wird. Unter einem großformatigen Stein wird ein Stein verstanden, der beispielsweise die Abmessungen 300 mm x 600 mm x 900 mm aufweist.

Ein Schamottestein mit 33 bis 43 Gew.-% Al₂O₃ und 1 bis 3 Gew.-% Alkalioxid für den Einsatz als großformatiger Zinnbad-Bodenstein bei der Flachglasherstellung ist aus der EP-A 0 453 886 bekannt. Dabei wird zur Verbesserung der Eigenschaften, insbesondere der Alkalibeständigkeit, der Gasdurchlässigkeit und der mechanischen Beständigkeit ein Stein vorgeschlagen, der eine offene Porosität von 16 bis 20 Vol.-%, eine Druckfestigkeit von 35 bis 60 N/mm², einen Druck-Elastizitätsmodul von 3.000 bis 10.000 N/mm², eine Druckfeuerbeständigkeit ta-Wert von 1.300 bis 1.450°C und eine maximale Gasdurchlässigkeit von 4 nPm aufweist. Dieser Stein baut auf der Erkenntnis auf, daß eine geringe Gasdurchlässigkeit wesentlich für einen verminderten Alkaliangriff ist. Allerdings wird der Bereich der vorgeschlagenen Gasdurchlässigkeit sehr weit gefaßt. Trotzdem bestehen für den Fachmann Zweifel, ob mit den in der DE-OS 40 13 294 niedergelegten Merkmalen eine Gasdurchlässigkeit unter 4 nPm erreichbar ist. Die Gasdurchlässigkeit wird dort in Verbindung mit der offenen Porosität gesehen. Bei einer offenen Porosität Zwischen 16 und 20 Vol.-% stellt sich auch eine geringe Gasdurchlässigkeit ein. Auch eine Erhöhung der Brenntemperatur führt zu einer Verringerung der Porosität. Es erscheint jedoch zweifelhaft, ob diese an kleinformatigen Steinen gewonnene Erkenntnis auf die Eigenschaften von großformatigen Steinen anwendbar ist. Mit der Gasdurchlässigkeit bzw. Luftdurchlässigkeit wird eine einfache Prüfgröße aufgezeigt, die einen Hinweis auf die Alkalibeständigkeit gibt. Die weiterhin als wesentlich beschriebene Druckfeuerbeständigkeit erscheint von untergeordneter Bedeutung. Dagegen wird über eine Wasserstoffdurchlässigkeit nichts ausgesagt.

Es ist jedoch bekannt, daß in solchen Öfen zur Herstellung von Flachglas nach dem Floatverfahren ein Zinnbad Anwendung findet, auf dem die Glasschmelze transportiert wird. Der Ofen ist nach außen abgeschlossen und steht unter reduzierender H₂-haltiger N₂-Atmosphäre. Zwischen dem Glasband, dem Zinnbad und den Schamottebodensteinen kommt es zu Wechselwirkungen. Alkali aus dem Glas scheidet sich an der Oberfläche der Schamottesteine ab und dringt in diese mehr oder weniger tief ein. Es tritt eine Änderung der Mineralphasen ein, verbunden mit unterschiedlichen Wärmeausdehnungskoeffizienten. Selbst bei geringen Temperaturdifferenzen kommt es daher zu Abschälungen von Schichten der Schamottesteine, die durch das Zinnbad nach oben steigen und die Unterseite des Glasbands verunreinigen. Andererseits diffundiert Wasserstoff aus der Ofenatmosphäre durch die Schamottesteine hindurch und steigt im Zinnbad auf, so daß sich an der Unterseite des Glasbands Blasen bilden. Durch diesen Transport wird auch das Ablösen von Alkaliglas von der Oberfläche der Schmamottesteine begünstigt. All dies stört bei der kontinuierlichen Flachglasherstellung und führt zu Qualitätseinbußen. Auf der zinnseitigen Glasoberfläche kommt es zu einer Anreicherung von Zinn in verschiedenen Wertigkeitsstufen. Dabei reagiert in erster Linie das flüssige Zinn mit dem Sulfat des Glases. Diese Reaktion ist umso heftiger, je mehr Wasserstoff im Zinn gelöst ist.

Der Erfindung liegt die Aufgabe zugrunde, einen großformatigen Schamottestein nach dem Oberbegriff des Patentanspruchs 1 aufzuzeigen, der einerseits verbesserte Eigenschaften in Bezug auf Alkalibeständigkeit in Verbindung mit den mechanischen Eigenschaften aufweist und bei dem andererseits die Blasenbildung von Wasserstoff an der Unterseite des Glasbands gemindert ist.

Erfindungsgemäß wird dies durch die Kombination der Merkmale des Patentanspruchs 1 erreicht.

Der Erfindung liegt die Erkenntnis zugrunde, daß eine niedrige Porosität nicht unbedingt eine geringe Gasdurchlässigkeit und eine hohe Alkalibeständigkeit nach sich zieht. Es wird durchaus eine größere Porosität als im Stand der Technik empfohlen, wobei darauf geachtet wird, durch andere Maßnahmen die Gasdurchlässigkeit zu reduzieren. Hinsichtlich der Gasdurchlässigkeit genügt es jedoch nicht, einen sehr großen Bereich anzugeben, sondern es wird hier ein vergleichsweise kleinerer Bereich aufgezeigt. Es ist jedoch zu bedenken, daß eine Reduzierung von z. B. 4 nPm auf 3 nPm ein bedeutende Reduzierung der Gasdurchlässigkeit beschreibt. Das stellt für Zinnbadbodensteine eine deutliche Reduzierung der Gasdurchlässigkeit dar. Die Alkalibeständigkeit verbessert sich in überraschender Weise sehr viel mehr, wenn die Gasdurchlässigkeit von 4 auf 3 nPm reduziert wird; bei einer Reduzierung von 10 auf 8 nPm ist die Verbesserung der Alkalibeständigkeit weit geringer.

Nach einer weiteren Erkenntnis sagt die Gasdurchlässigkeit bzw. Luftdurchlässigkeit eines solchen Schamottesteins wenig über die Wasserstoffdurchlässigkeit aus. Im Gegenteil, mit einer niedrigen Luftdurchlässigkeit scheint eine hohe Wasserstoffdurchlässigkeit und umgekehrt verbunden zu sein. Es kommt darauf an, beide Werte niedrig zu halten.

Durch das vergleichsweise Zulassen einer größeren offenen Porosität im Vergleich zum Stand der Technik ergibt sich vorteilhaft ein Stein, der gegen thermo-mechanische Beanspruchungen unempfindlicher ist. Es zeigen sich weniger sich ablösende Steinstücke (Floater) und der Ausschuß im Glas ist geringer. Auch die Aufschwimmvorgänge von Steinstücken sind reduziert.

Die verbesserte Alkalibeständigkeit bedeutet auch, daß die Einlagerung von Alkalien in die Oberfläche des Steins reduziert wird, wobei sich das Alkali mehr auf der Oberfläche des Steins ablagert und nicht tiefer in den Stein eindringt. Dies ist insbesondere dann der Fall, wenn der Stein mit einer Gasdurchlässigkeit zwischen 1 und 2 nPm hergestellt wird.

Die vorteilhaft geringere Wasserstoffdiffusion reduziert die Blasenbildung an der Unterseite des Glasbands. Weiterhin wird der Transportmechanismus für Reduktionsprodukte eingeschränkt. Die reduzierte Wasserstoffdiffusion führt dazu, daß weniger reduzierbare chemische Bestandteile (SiO₂, Na₂O, Fe₂O₃) reduziert und damit auch weniger an die Oberfläche des Steins transportiert werden. Schließlich sind auch die Ablöseerscheinungen von Alkaliglas von der Oberfläche der Steine geringer.

Vorteilhaft weist der Schamottestein einen röntgenamorphen Anteil von 10 bis 30 Gew.-%, vorzugsweise 20 bis 25 Vol.-%,, auf. Damit wird eine verbesserte Gefügeelastizität erreicht und somit eine höhere Resistenz gegen thermo-mechanische Beanspruchungen.

Weiterhin kann der Stein eine Ultraschallgeschwindigkeit von 2.000 bis 4.000 - vorzugsweise etwa 2.800 bis 3.800, insbesondere etwa 3.300 bis 3.600 m/sec - aufweisen. Die Ultraschallgeschwindigkeit sollte nicht zu niedrig, andererseits aber auch nicht zu hoch sein. Sie stellt ein Maß für die Versinterung dar, wobei eine niedrige Ultraschallgeschwindigkeit eine beeinträchtigte Festigkeit wiederspiegelt, während eine zu hohe Ultraschallgeschwindigkeit auf einen hohen Glasanteil, verbunden mit geringer Elastizität, hindeutet.

Das Verfahren zur Herstellung eines solchen Schamottesteins sieht vor, daß eine Mischung aus:
- Schamotte in einer KÖrnung von 0 bis 5 mm,
- kieselsäurereichem, feuerfestem Ton mit einem Quarzanteil > 50 % bezogen auf den Tonanteil und
- einer maximalen Teilchengröße des Quarzes von 50 µm,
- einem feinteiligen, feuerfesten Ton mit einem Gesamtalkalianteil von bis zu 3 %,
- einem Alkali-Alumosilikat und einem Bindemittel
gemischt, zu großformatigen Steinen geformt, getrocknet und gebrannt wird. Diese Mischung führt zu einem Schamottestein, der die Kombination der geringen Gasdurchlässigkeit mit der geringen Wasserstoffdiffusion aufweist. Überraschenderweise wirkt sich eine erhöhte offene Porosität dabei nicht nachteilig aus. Die erhöhte Porosität beeinflußt vielmehr die Elastizität positiv.

Ein Teil der Schamotte kann durch ein natürliches Tonerdesilikat ersetzt sein. Damit wird eine weitere Absenkung der Wasserstoffdiffusion erreicht.

Als Alkali-Alumosilikat kann feinteiliges C-Glas mit einer Korngröße < 60 µm Verwendung finden. Damit kann ein preiswerter Rohstoff sinnvoll eingesetzt werden.

Die Steine können bei Temperaturen von 1.200 bis 1.350°C gebrannt werden, wobei die maximale Brenntemperatur mindestens über einen Zeitraum von 5 h gehalten wird. Damit wird eine gleichmäßige Verteilung der physikalischen Eigenschaften quer durch den Stein erreicht, was sich positiv auf die Elastizität und die Gasdurchlässigkeit auswirkt.

Die Mischung kann auf eine Abformfeuchte von 4 bis 7 % - vorzugsweise 5,5 bis 6,5 % - eingestellt werden. Damit wird unterschiedlichen Formgebungsverfahren, wie Pressen, Stampfen u. dgl. Rechnung getragen.

Ein Teil der Abformfeuchte kann in Schlickerform in die Mischung eingebracht werden; dabei sind die Feinstkomponenten der Mischung hierin enthalten.

Die Erfindung wird anhand dreier Beispiele, die in der nachfolgenden Tabelle dargestellt sind, weiter beschrieben und erläutert.

| | 1 | 2 | 3 |
|---|---|---|---|
| Schamotte 0 - 0,5 | 19 | 29 | 29 |
| Schamotte 0,5 - 5 | 40 | 45 | 45 |
| Ton, SiO₂-reich | 10 | 15 | 7 |
| Ton, alkalireich | 10 | 5 | 13 |
| Alkali-Alumosilikat | 4 | 5 | 5 |
| nat. Tonerdesilikat | 16 | - | - |
| Bindemittel | 1 | 1 | 1 |
| Feuchte | 6,3 | 6,0 | 6,5 |
| Brenntemperatur °C | 1.310 | 1.300 | 1.300 |
| Rohdichte g/m³ | 2,18 | 2,12 | 2,08 |
| offene Porosität Vol.-% | 19,7 | 22,1 | 24,3 |
| Gasdurchlässigkeit nPm | 1,2 | 2,05 | 2,8 |
| H₂-Diffusion mm WS | 65 | 95 | 70 |
| KDF nPM | 58 | 47 | 42 |
| E-Modul KN | 9,8 | 7,2 | 5,3 |
| Glasphasenanteil % | 20 | 22 | 23 |
| Ultraschallgeschwindigkeit m/sec | 3.700 | 3.500 | 3.200 |
| SiO₂ Gew.-% | 53 | 56,1 | 55,3 |
| Al₂O₃ Gew.-% | 42,7 | 39,3 | 40,5 |
| Na₂O Gew.-% | 1,1 | 1,221 | 1,35 |
| K₂O Gew.-% | 1,1 | 1,221 | 1,35 |

Besonders bemerkenswert an dem Beispiel 1 ist es, daß durch die Zugabe des Tonerdesilikats, welches einen wesentlichen Teil der feinkörnigen Schamotte ersetzt, die Kombination einer niedrigen Gasdurchlässigkeit mit einer niedrigen Wasserstoffdiffusion in überraschender Weise erzielt wird. Außerdem zeigt das Ausführungsbeispiel 1 einen besonders geringen Glasphasenanteil, was darauf zurückzuführen ist, daß die Versatzkomponenten insgesamt einen geringen Alkalianteil ergeben.

Für die beiden Beispiele 2 und 3 ist eine vergleichsweise hohe offene Porosität kennzeichnend. Trotzdem ergibt sich überraschenderweise im Vergleich zum Stand der Technik eine niedrigere Glasdurchlässigkeit. Es ergeben sich niedrige Werte für die Wasserstoffdiffusion.

## Patentansprüche

1. Schamottestein mit 33 bis 43 Gew.-% Al₂O₃ und 1 bis 3 Gew.-% Alkalioxid für den Einsatz als großformatiger Zinnbadbodenstein bei Öfen zur Herstellung von Flachglas nach dem Floatverfahren, mit einer Druckfestigkeit von 35 bis 60 N/mm² und mit einem Druckelastizitätsmodul von 3.000 bis 10.000 N/mm², dadurch gekennzeichnet, daß der Schamottestein
- Schamotte in einer Körnung bis 5 mm,
- kieselsäurereichen, feuerfesten Ton mit einem Quarzanteil > 50 % bezogen auf den Tonanteil und
- einer maximalen Teilchengröße des Quarzes von 50 µm,
- einen feinteiligen, feuerfesten Ton mit einem Gesamtalkalianteil von bis zu 3 %,
- ein Alkali-Alumosilikat und ein Bindemittel
aufweist, so daß sich eine offene Porosität von 19,7 bis 25 Vol.- %, eine Gasdurchlässigkeit von unter 3 nPm, vorzugsweise von 0,5 bis 2 nPm, und eine Wasserstoffdiffusion von < 150 mm Wassersäule (1471,5 Pa), vorzugsweise von 30 bis 100 mm Wassersäule, ergeben.

2. Schamottestein nach Anspruch 1, dadurch gekennzeichnet, daß er einen röntgenamorphen Anteil von 10 bis 30 Gew.-%, vorzugsweise 20 bis 25 Vol.-%, aufweist.

3. Schamottestein nach Anspruch 1 oder 2, dadurch gekennzeichnet, daß er eine Ultraschallgeschwindigkeit von 2.000 bis 4.000 - vorzugsweise etwa 2.800 bis 3.800, insbesondere etwa 3.300 bis 3.600 m/sec - aufweist.

4. Verfahren zur Herstellung eines Schamottesteins nach einem oder mehreren der Ansprüche 1 bis 3, dadurch gekennzeichnet, daß eine Mischung aus:
- Schamotte in einer Körnung von 0 bis 5 mm,
- kieselsäurereichem, feuerfestem Ton mit einem Quarzanteil > 50 % bezogen auf den Tonanteil und
- einer maximalen Teilchengröße des Quarzes von 50 µm,
- einem feinteiligen, feuerfesten Ton mit einem Gesamtalkalianteil von bis zu 3 %,
- einem Alkali-Alumosilikat und einem Bindemittel
gemischt, zu großformatigen Steinen geformt, getrocknet und gebrannt wird.

5. Verfahren nach Anspruch 4, dadurch gekennzeichnet, daß ein Teil der Schamotte durch ein natürliches Tonerdesilikat ersetzt ist.

6. Verfahren nach Anspruch 4, dadurch gekennzeichnet, daß als Alkalialumosilikat feinteiliges C-Glas in einer Korngröße < 60 µm Verwendung findet.

7. Verfahren nach Anspruch 4, dadurch gekennzeichnet, daß die Steine bei Temperaturen von 1.200 bis 1.350 °C gebrannt werden und die maximale Brenntemperatur mindestens über einen Zeitraum von 5 h gehalten wird.

8. Verfahren nach Anspruch 4, dadurch gekennzeichnet, daß die Mischung auf eine Abformfeuchte von 4 bis 7 %, vorzugsweise 5,5 bis 6,5 %, eingestellt wird.

9. Verfahren nach Anspruch 8, dadurch gekennzeichnet, daß ein Teil der Abformfeuchte in Schlickerform in die Mischung eingebracht wird, in dem die Feinstkomponenten der Mischung enthalten sind.

## Claims

1. Superduty fireclay refractory brick with 33 to 43 per cent by weight Al₂O₃ and 1 to 3 per cent by weight alkali oxide for use as a large-format bottom block in a tin bath in furnaces for manufacturing flat glass according to the float technique, having a compressive strength of 35 to 60 N/mm² and an elasticity of compression modulus of 3000 to 10 000 N/mm², **wherein** the brick comprises
- chamotte with a grain size of 0 to 5 mm,
- clay, rich in silic acid, incombustible and with a quartz component > 50 % with respect to the clay component, and
- a maximum particle size of the quartz of 50 µm,
- a fine particle, incombustible clay with a total alkali component of up to 3 %,
- an alkali-aluminosilicate and a binding agent
so that the brick has an open porosity of approx. 19,7 to 25 percent by volume, a gas permeability of less than 3 nPm , preferably of 0,5 to 2 nPm, and a hydrogen diffusion of less than 150 mm H₂O (1471,5 Pa), preferably of 30 to 100 mm H₂O.

2. The superduty fireclay refractory brick according to claim 1, **wherein** said brick has an X-ray amorphous component of 10 to 30 percent by weight, preferably of 20 to 25 percent by weight.

3. The superduty fireclay refractory brick according to claim 1, **wherein** said brick has an ultrasonic velocity of 2000 to 4000 m/s, preferably approx. 2800 to 3800 m/s, in particular approx. 3300 to 3600 m/s.

4. A method for manufacturing a superduty fireclay refractory brick of one or more of the claims 1 to 3**, wherein** a mixture of
- chamotte with a grain size of 0 to 5 mm
- clay, rich in silic acid, incombustible and with a quartz component greater than 50 percent with respect to the clay component, and
- with a maximum particle size of the quartz of 50 µm
- a fine particle incombustible clay with a total alkali component of less than or equal to 3 %
- an alkali-aluminosilicate and a binding agent
is mixed, moulding said mixture into large-format bricks and drying and firing said moulded mixture.

5. The method according to claim 4, **wherein** part of said chamotte is replaced by a natural aluminosilicate.

6. The method according to claim 4, **wherein** a fine particle C-glass with a grain size of less than 60 µm is used as said alkali-aluminosilicate.

7. The method according to claim 4, **wherein** the bricks are fired at temperatures of 1200° to 1350 °C and the maximum firing temperature is maintained over a period of at least five hours.

8. The method according to claim 4, **wherein** the mixture is set to a mould moisture of 4 to 7 %, preferably 5,5 to 6,5 %.

9. The method according to claim 8, **wherein** one part of the mould moisture can be introduced into the mixture in the form of slips containing the finest components of the mixture.

## Revendications

1. Brique de chamotte contenant 33 à 43 % en poids de Al₂O₃ et 1 à 3 % en poids d'oxyde alcalin, destinée à être utilisée en tant que brique de grand format pour fond d'un bain d'étain dans des fours de fabrication de verre plat selon le procédé float, présentant une résistance à la compression de 35 à 60 N/mm² et un module d'élasticité de compression de 3 000 à 10 000 N/mm², caractérisée en ce que la brique de chamotte contient
- de la chamotte d'une granulométrie allant jusqu'à 5 mm,
- de l'argile réfractaire riche en acide silicique avec une proportion de quartz > 50 % par rapport à la proportion d'argile et
- une grosseur maximale des particules de quartz de 50 µm,
- une argile réfractaire fine avec une proportion totale d'alcali pouvant aller jusqu'à 3 %,
- un silicate d'aluminium alcalin et un liant,
de sorte qu'il en résulte une porosité ouverte de 19,7 à 25 % en volume, une perméabilité aux gaz inférieure à 3 nPm, de préférence comprise entre 0,5 et 2 nPm, et une diffusion d'hydrogène < 150 mm de colonne d'eau (1 471,5 Pa), de préférence comprise entre 30 et 100 mm de colonne d'eau.

2. Brique de chamotte selon la revendication 1, caractérisée en ce qu'elle comporte une proportion amorphe aux rayons X de 10 à 30 % en poids, de préférence de 20 à 25 % en volume.

3. Brique de chamotte selon la revendication 1 ou 2, caractérisée en ce qu'elle présente une vitesse ultrasonique de 2 000 à 4 000 - de préférence d'environ 2 800 à 3 800, en particulier d'environ 3 300 à 3 600 m/s.

4. Procédé de fabrication d'une brique de chamotte selon une ou plusieurs des revendications 1 à 3, caractérisée en ce qu'un mélange de
- chamotte d'une granulométrie allant de 0 jusqu'à 5 mm,
- d'argile réfractaire riche en acide silicique avec une proportion de quartz > 50 % par rapport à la proportion d'argile et
- une grosseur maximale des particules de quartz de 50 µm,
- d'une argile réfractaire fine avec une proportion totale d'alcali pouvant aller jusqu'à 3 %,
- d'un silicate d'aluminium alcalin et d'un liant,
est mélangé, formé en briques de grand format, séché et cuit.

5. Procédé selon la revendication 4, caractérisé en ce qu'une partie de la chamotte est remplacée par un silicate d'alumine naturel.

6. Procédé selon la revendication 4, caractérisé en ce qu'on utilise comme silicate d'aluminium alcalin un verre au C à fines particules d'une granulométrie < 60 µm.

7. Procédé selon la revendication 4, caractérisé en ce que les briques sont cuites à des températures de 1 200 à 1 350 °C et la température de cuisson maximale est maintenue au moins pendant une durée de 5 h.

8. Procédé selon la revendication 4, caractérisé en ce que le mélange est réglé sur une humidité de moulage de 4 à 7 %, de préférence de 5,5 à 6,5 %.

9. Procédé selon la revendication 8, caractérisé en ce qu'une partie de l'humidité de moulage est introduite dans le mélange sous forme de barbotine, dans laquelle sont contenus les composants les plus fins du mélange.
